# EUROPEAN PATENT APPLICATION

(11) **EP 2 481 691 A1**
(43) Date of publication of application: **01.08.2012**
(21) Application number: 10816743.8
(22) Date of filing: 20.09.2010
(51) Int. Cl.: B65G 39/16, B65H 23/038

(54) **COMPENSATOR DEVICE FOR MOVING BELTS**

(30) Priority: 21.09.2009 ES 200930710
(71) Applicant: Alcazar Garcia, Joaquin, 08440 Cardedeu (Barcelona) (ES)
(72) Inventor: Alcazar Garcia, Joaquin, 08440 Cardedeu (Barcelona) (ES)
(74) Representative: Morgades y Manonelles, Juan Antonio
(86) International application number: PCT/ES2010/070606
(87) International publication number: WO 2011/033162

(57) **Abstract**

This device comprises a roller (5) rotating on a shaft (6) and that pivots via said shaft between two supporting elements (1, 2), which provide support, then the roller can be properly applied against said belts, thereby correcting the irregularities produced by the tensions to which the belts are subjected by the operations performed. Therefore, the support (1, 2) are constituted by two boxes (3, 4) closed with respective covers (7, 8), facing one another, each cover having an opening (7', 8') via which the ends (6a, 6b) of the shaft (6) pass through with clearance, each of which ends are attached to tie rods (10) included in the boxes (3, 4) and each end is linked to two rolling elements (11, 12) that can be moved, each in an oblong opening (13, 14) in a plate (9) coupled at the base of each box.

## Description

### OBJECT OF THE INVENTION

The present invention refers, as the heading indicates, to a compensator device for moving belts.

### FIELD OF THE INVENTION

This device is used in machines or installations that work with moving belts, especially of paper, to tension them properly in their movement and correct possible irregularities caused by tensions due to operations carried out with them.

### BACKGROUND OF THE INVENTION

Known devices, such as the object of European Patent no. 97929211.7, present a roller and a shaft on which it rotates and which pivots, via the ends of said shaft, on two supporting elements that comprise the means to regulate the movement of the roller/shaft assembly, so that when one end of the assembly tips in one direction, the opposite end tips in the other direction.

This requires continuous and bothersome maintenance to ensure correct operation, as, in the case of the aforementioned patent, they have gears that mesh with the ends of the roller shaft and that, activated by movement device, allow the roller/shaft assembly to pivot.

### SUMMARY OF THE INVENTION

With the compensator device object of the present invention, which also comprises the roller fitted onto the shaft and the two supporting elements between which it pivots, it is not necessary to be continuously adjusting the supporting elements to ensure correct operation and perfect pivoting of the roller/shaft assembly, as these devices have no gears or operating elements and their construction, as well as the of the supporting elements, is much simpler, thus being easier and quicker to build and, consequently, more economic.

For this reason, the supporting elements of the present device are made of by two closed boxes with their corresponding covers facing each other, both of these have openings through which the ends of the roller shaft pass with sufficient clearance, these are secured to two tie rods inside the boxes and pressing against respective thick plates fitted inside the boxes, these plates have each an opening through which the corresponding rolling elements linked to the tie rods can move freely.

The openings of the plates through which the rolling elements can move are oblong and positioned perpendicularly to the other, forming a "T" shape, so that if the machine or installation pulls more on one side of the band than the other, the tie rod of the box of said side tips, by means of its rolling elements in the direction that makes the corresponding end of the roller/shaft assembly tip automatically in the opposite direction to the tie rod of the opposite box, compensating and automatically regulating any irregularity produced.

Likewise, each of the boxes is located inversely with regard to the other, so that the roller/shaft assembly can pivot in all directions.

The mentioned rolling elements are linked to the tie rods via respective shafts, one in each box, by the corresponding end of the roller shaft that is secured to the tie rod, through which said shaft goes through to secure the rolling element.

The rolling elements secured by the ends of the roller shaft move through the corresponding openings that comprise the horizontal section of the "T" in the plates in the boxes, this section being longer than the other and thus ensuring the perfect operation of the device.

These and other characterizing features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In the drawings:

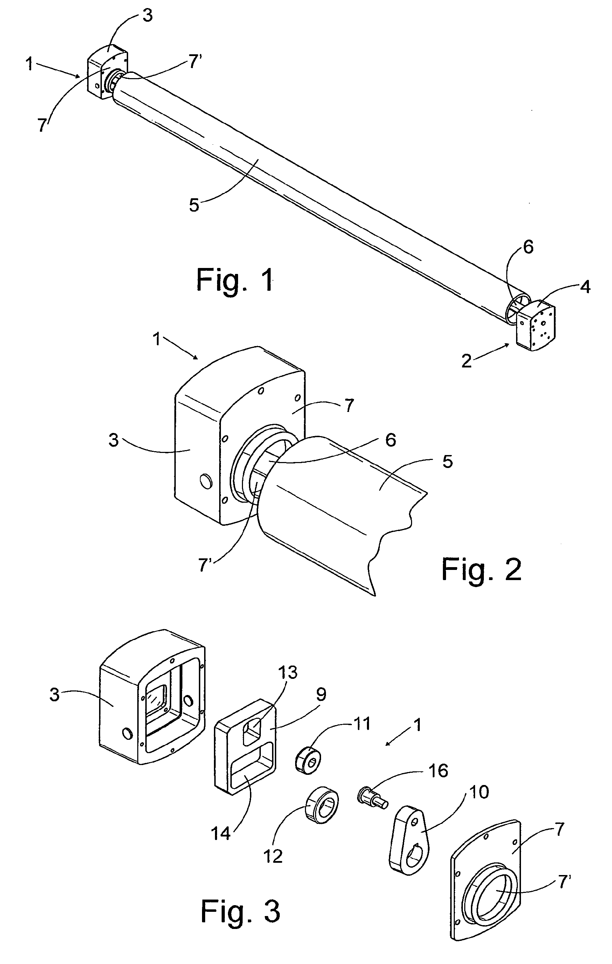

Figure 1 is a perspective view of the compensator device in question,
Figure 2 shows a perspective view of the end of the device in a greater scale,
Figure 3 is an exploded perspective view of a box of the device,
Figure 4 illustrates a longitudinal section view of the device with the boxes, and
Figure 5 shows an elevation view of a box on the side with the cover, but with the cover removed.

### DESCRIPTION OF AN EXAMPLE OF EMBODIMENT

According to the drawings, the illustrated compensator device for moving belts consists of two supporting elements (1, 2) that are composed of two boxes (3, 4) facing each other by their mouths and by a roller (5) rotating on a shaft (6) that projects from the ends of the same and that pivots between said boxes in which it is supported.

The boxes (3, 4) are closed with covers (7, 8) that present respective circular openings (7', 8') with corresponding exterior lips, and each of these boxes has a thick plate inside (9) and, pressing against it, a tie rod (10) to which the two moving rolling elements (11, 12) are linked by two oblong openings (13, 14) on the plate (9) positioned perpendicularly forming a "T" shape.

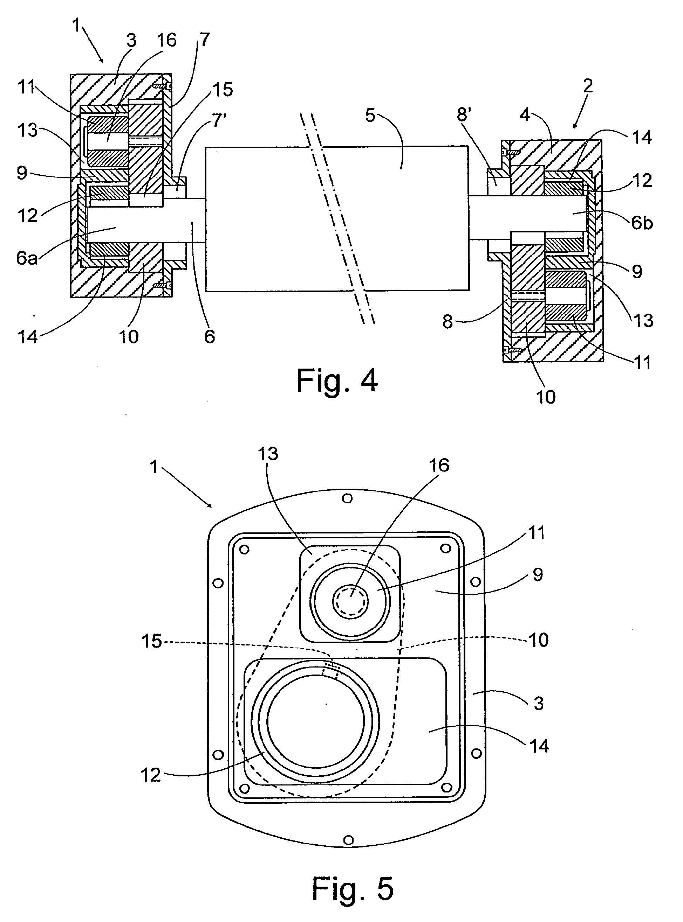

In the example illustrated, the tie rod (10) is represented as a connecting rod (a dotted line in figure 5) but it may also be an eccentric or other elements carrying out the same function of linking the rolling elements (11, 12), which represented by two bushes, can also be other elements acting in the same manner.

The boxes (3, 4) are located inversely with regard to the other, the ends (6a, 6b) of the shaft (6) holding the roller (5) going freely through the openings (7', 8') on their covers (7, 8).

These shaft ends (6) go through the tie rods (10), to which they are secured by means of pins (15), and go through the rolling elements (12) being the means for linking them with the tie rods.

Rolling elements (12) are larger than the rolling elements (11), and openings (13) of the plates (9) through which the latter move constitute the vertical section of the "T" and are smaller and shorter than the openings (14) through which the former move, all the openings (13 and 14) being rectangular.

The rolling elements (11) are linked to their respective tie rods (10) by means of shafts (16) of two diameters and with a head inserted through the holes of these elements and are threaded onto the tie rods (10).

With the device thus designed and assembled, its roller (5) will pivot in the necessary direction at any given moment according to tension of the band or bands it is applied to, compensating any discontinuities due to alignment, thicknesses, lengths, etc. and avoiding irregularities in the same.

The invention can within its essentiality be put into practice in other embodiments differing only in detail from the one having been described above only by way of example, said other embodiments also falling within the scope of the protection being claimed. This compensator device for moving belts may thus be manufactured in any shape and size, with the most suitable means and materials and with the most convenient accessories, and the components may be replaced by others that are technically equivalent, as all of this is contained within the claims.

## Claims

1. Compensator device for moving belts, comprising a roller (5) that rotates on a shaft (6) and that pivots via said shaft between two supporting elements (1, 2) to press against said belts in the corresponding machines or installations that work with them, **characterised in that** the supporting elements (1, 2) are constituted by two closed boxes (3, 4) with covers (7, 8) facing one another, each cover having an opening (7', 8') through which the ends (6a, 6b) of the shaft (6) of the roller (5) pass through with sufficient clearance, each end of which is attached to tie rods (10) inside the boxes (3, 4) and pressing against respective thick plates (9) fitted inside them, these plates having openings (13, 14) through which the corresponding rolling elements (11, 12) linked to the tie rods (10) can move, with sufficient clearance.

2. Compensator device for moving belts, according to the claim 1, **characterised in that** the openings (13, 14) of the plates (9) are oblong and are positioned perpendicularly to the other, forming a "T" shape.

3. Compensator device for moving belts, according to the claim 1, **characterised in that** each of the boxes (3, 4) is located inversely with regard to the other.

4. Compensator device for moving belts, according to the claim 1, **characterised in that** the rolling elements (11, 12) are linked to the tie rods (10) through their respective shafts.

5. Compensator device for moving belts, according to the claim 4, **characterised in that** the shaft with which each box, one (12) of the rolling elements (11, 12) is linked to the tie rod (10) comprises the corresponding end of the shaft (6) of the roller (5) which, secured to said tie rod which it passes through, goes through the element (12).

6. Compensator device for guiding moving belts, according to claims 2 and 5, **characterised in that** the respective rolling elements (12) of the boxes (3, 4) move through openings (14) that comprise the horizontal sections of the "T".

7. Compensator device for guiding moving belts, according to the claim 6, **characterised in that** the openings (14) are longer than the openings (13).
